# NEUE EUROPÄISCHE PATENTSCHRIFT

(11) **EP 3 340 742 B2**
(45) Veröffentlichungstag und Bekanntmachung des Hinweises auf die Entscheidung über den Einspruch: **14.10.2026**
(45) Hinweis auf die Patenterteilung: 31.01.2024
(21) Anmeldenummer: 17207197.9
(22) Anmeldetag: 14.12.2017
(51) Int. Cl.: H05B 45/22, H05B 47/10, H05B 45/10

(54) **SCHALTUNGSANORDNUNG ZUM BETREIBEN VON LICHTQUELLEN**
CIRCUIT ASSEMBLY FOR OPERATING OF LIGHT SOURCES AND SENSOR FOR CONNECTION TO A CIRCUIT ASSEMBLY
AGENCEMENT DE CIRCUIT PERMETTANT LE FONCTIONNEMENT DES SOURCES LUMINEUSES ET CAPTEUR DE RACCORDEMENT À UN AGENCEMENT DE CIRCUIT

(30) Priorität: 22.12.2016 DE 102016226016
(43) Veröffentlichungstag der Anmeldung: 27.06.2018
(73) Patentinhaber: Inventronics GmbH, 85748 Garching b. München (DE)
(72) Erfinder: Pilz, Axel, 74632 Neuenstein (DE); Heckmann, Markus, 81479 München (DE)
(74) Vertreter: Prüfer & Partner mbB Patentanwälte · Rechtsanwälte

(56) Entgegenhaltungen:
- EP-A1- 3 001 778
- WO-A1-2015/067757
- AT-U1- 14 580
- DE-A1- 102007 055 164
- DE-A1- 102013 221 496
- DE-A1- 102013 226 964
- DE-A1- 102014 104 447
- DE-A1- 102014 208 710
- US-A1- 2011 260 619

## Beschreibung

### Technisches Gebiet

Die Erfindung betrifft eine Schaltungsanordnung zum Betreiben von Lichtquellen.

### Hintergrund

Die Erfindung geht aus von einer Schaltungsanordnung zum Betreiben von Lichtquellen nach der Gattung des Hauptanspruchs.

Speziell für intelligente Einzelleuchten (z.B. Stehleuchten) wird zunehmend eine automatische tageslicht-und präsenz-abhängige Lichtsteuerung in Ausschreibungen vorgegeben. Gründe dafür sind gestiegene Komfortansprüche, in Form einer konstanten Beleuchtungsstärke auf der Arbeitsoberfläche, bei gleichzeitig die restriktiveren Vorgaben für den maximalen Energieverbrauch. Hier seien die ENEV bzw. die EPBD genannt. Daher sind zunehmend einfache und kostengünstige Lösungen gefordert. Dies bedeutet u.a. dass die Funktion der Tageslichtregelung und Präsenzerfassung mit möglichst wenigen Komponenten realisiert werden sollte. Diese Komponenten benötigen wie alle elektronischen Geräte eine Energieversorgung die effizient genug ist, um eine geringe Standby Stromaufnahme der Gesamtlösung zu gewährleisten.

Aus der AT 14 580 U1 ist eine Vorrichtung zum Betreiben von LEDs bekannt, die einen Ausgang aufweist, an den ein LED-Modul angeschlossen werden kann. Zusätzlich ist eine Schnittstelle vorgesehen, die ebenfalls mit dem LED-Modul verbunden werden kann um Parameter des LED-Moduls zu regeln beziehungsweise abzufragen.

Aus der WO 2015/067757 A1 sind ein LED-Konverter und ein LED-Modul bekannt, welche über eine drahtlose Schnittstelle zum Zwecke des Betreibens des LED-Moduls miteinander verbunden werden können. Die Energie für den Betrieb des LED-Moduls wird hier ebenfalls drahtlos übertragen.

Aus der DE 102013226964 A1 ist eine Schaltungsanordnung bekannt, die eine Spannung in eine Schnittstelle eines LED Modules einprägt, und durch den durch die eingeprägte Spannung fließenden Strom Rückschlüsse auf einen Parameter des LED Modules zieht.

Die LED Technik ermöglicht nicht nur die Entwicklung immer effizienterer Leuchten, sondern bietet neue Designfreiheiten. Diese Designfreiheit ergibt sich neben der Möglichkeit der flexiblen Anordnung der Einzel LED auf frei gestaltbaren Platinen-Formen / Platinen-Formaten insbesondere auch aus der geringen Bauhöhe der LED Module. Die Limitierung der minimal realisierbaren Leuchtenbauhöhe wird derzeit allein durch die Bauhöhe des LED Treibers und der in die Leuchte zu integrierenden Lichtsteuerkomponenten bestimmt.

Zusammenfassend stellen sich für die Lichtindustrie also zwei gleichzeitig zu lösende Probleme, zum einen der Bedarf an einfachen, kostengünstigen tageslicht-und präsenzabhängigen Lichtsteuerlösungen die aus möglichst wenigen Komponenten besteht. Zum anderen soll die Bauhöhe der eingesetzten Komponenten möglichst gering sein wobei gleichzeitig eine dauerhafte effiziente Energieversorgung erforderlich ist.

Die bisher am Markt verfügbaren Lösungen orientieren sich an der de Facta Standardbauhöhe der LED Treiber von 21 mm. In der Regel bestehen die Lösungen für Einzelleuchten aus einem oder mehreren dimmbaren LED-Treibern, einem Steuergerät und mindestens einen Licht- / Präsenz-Sensor.

Bei bereits optimierten/vereinfachten Systemen entfällt das Steuergerät, dies Funktion übernimmt entweder der Sensor oder alternativ der LED Treiber selbst. Für diese Systeme gibt es für den Anschluss des Sensors zwei Lösungen:
a) Anschluss des Sensors über die bereits vorhandene DALI Schnittstelle des Treibers. Dafür muss die entweder die normalerweise passive DALI Schnittstelle des Treibers zu einer aktiven DALI Schnittstelle modifiziert werden, die einen DALI Strom für die Versorgung externer Komponenten liefert, oder ein DALI Netzteil in den Sensor integriert werden. Nachteil sind zu einen ein höherer Bauteileaufwand und zum anderen eine höhere Standby-Leistung.
b) Der LED Treiber besitzt eine zusätzliche Schnittstelle für den Sensoranschluss. Hauptnachteil ist der höhere Bauteileaufwand und die zusätzlichen Klemmen.

### Aufgabe

Es ist Aufgabe der Erfindung, einen LED Treiber anzugeben, welcher bei geringer Bauhöhe kostengünstiger herzustellen und einfach zu installieren beziehungsweise zu betreiben ist.

### Darstellung der Erfindung

Die Lösung der Aufgabe erfolgt erfindungsgemäß mit einer Schaltungsanordnung zum Betreiben von Lichtquellen, aufweisend einen Eingang zum Eingeben einer Eingangsspannung, einen Ausgang zum Ausgeben eines Ausgangsstromes, eine erste Schnittstelle zum Steuern der Schaltungsanordnung und eine zweite Schnittstelle, wobei die Schaltungsanordnung eingerichtet ist, zwei unterschiedliche Betriebsmodi einzustellen. In einem ersten Betriebsmodus ist die Schaltungsanordnung eingerichtet über die erste Schnittstelle gesteuert zu werden und einen an der zweiten Schnittstelle anliegenden Strom zu messen und einen Strombedarf für den Ausgang entsprechend dem gemessenen Strom festzustellen.

In einem zweiten Betriebsmodus ist die Schaltungsanordnung eingerichtet, über die erste Schnittstelle gesteuert zu werden und die Information über den am Ausgang einzustellenden Ausgangsstrom zu empfangen, sowie über die zweite Schnittstelle digital kodierte Informationen von einem an die zweite Schnittstelle angeschlossenen Sensor zu empfangen, zu verarbeiten, und diese verarbeiteten digital kodierten Sensorinformationen an die erste Schnittstelle weiterzugeben.

Mit Steuern der Schaltungsanordnung sind hier z.B. das Ein- und Ausschalten der an die Schaltungsanordnung angeschlossenen Lichtquellen sowie das Dimmen dieser Lichtquellen gemeint.

Die erfindungsgemäße Lösung nutzt die bei der Schaltungsanordnung vorhandene zweite Schnittstelle. Die zweite Schnittstelle ist eine LEDset Schnittstelle. Über die LEDset Schnittstelle wird über den Anschluss eines externen Widerstandes die Stromstärke für die an den Treiber angeschlossenen LED Module eingestellt. Diese Funktion wird allerdings mehr und mehr durch eine Programmierung über die erste Schnittstelle, welche eine DALI Schnittstelle ist, oder über NFC Technologie mittels einer Software ersetzt. Die so programmierten Stromwerte haben Vorrang vor den Einstellungen die über den Widerstand an der LEDset Schnittstelle vorgegeben werden würden. Die Erfindung nutzt die LEDset Schnittstelle für den alternativen Anschluss eines Licht- und Präsenz-Sensors. Dieser Sensor sendet periodisch Lichtwerte und Präsenzereignisse digital kodiert an die Schaltungsanordnung in dem er Informationen über die LEDset Schnittstelle mittels zwei verschiedener Spannungen aufmoduliert. Gleichzeitig dient die LEDset Schnittstelle der Energieversorgung des Sensors. Die Schaltungsanordnung erkennt den Sensoranschluss automatisch, sobald er entsprechende Telegramme erhält. Da die LEDset Schnittstellen unterschiedlicher Schaltungsanordnungen in der Regel nicht miteinander verbunden werden dürfen, um ungewollte Stromflüsse und Verschiebung von Spannungspegeln zu verhindern, kann eine weitere Schaltungsanordnung nicht einfach parallel geschaltet werden. Deshalb besitzt der Sensor zum Anschluss einer weiteren Schaltungsanordnung eine zusätzliche über einen Optokoppler galvanisch abgetrennte Schnittstelle, über diese erhält die zweite Schaltungsanordnung identische Informationen wie die erste.

Diese Ausgestaltung weist mehrere Vorteile auf:
a) der Sensor nutzt die bestehende LEDset Schnittstelle und meldet sich selbständig an.
   Vorteile:
   - Keine weitere Schnittstelle an der Schaltungsanordnung erforderlich.
   - Wenn kein Sensor angeschlossen ist, bleibt die normale LEDset Funktion zur Einstellung der LED Modul Bestromung erhalten.
b) Der Sensor benötigt keine eigene Netzversorgung, die Versorgung erfolgt direkt über die Schaltungsanordnung.
   Vorteile:
   - Die Bauhöhe des Sensors kann reduziert werden.
   - Die Standby Leistung des Systems Schaltungsanordnung / Sensor erhöht sich gegenüber der des Treibers ohne Sensor nur minimal.
c) Durch eine zusätzliche passive, galvanisch abgetrennte Schnittstelle am Sensor lässt sich ein zweiter Treiber anschließen.
   Vorteil:
   - Die Lösung ist auch für Leuchten mit höherem Lichtstrom geeignet.
d) Die erste Schnittstelle (DALI Interface) des Treibers bleibt verfügbar.
   Vorteile:
   - Über den Anschluss eines Tasters kann eine zusätzliche manuelle Bedienung (Schalten/Dimmen/Sollwertspeicherung) realisiert werden
   - In einer Weiterentwicklung der erfindungsgemäßen Lösung, kann die Kombination aus Schaltungsanordnung und Sensor über die DALI Leitung in eine DALI Installation eingebunden werden. Dabei arbeitet die Schaltungsanordnung zusätzlich als "DALI Sensor Koppler" und gibt die Licht- und Präsenzinformationen des angeschlossenen Sensors über entsprechende DALI Telegramme an eine übergeordnete DALI Steuereinheit weiter.

In einer besonders bevorzugten Ausführungsform sind die Lichtquellen Leuchtdioden oder Leuchtdiodenmodule. Leuchtdiodenmodule sind hier auf einer Leiterplatte aufgebaute Module mit mehreren seriell und/oder in Reihe geschalteten LEDs und zusätzlicher Elektronik, die den Strombedarf der LEDs regeln. Diese weisen eine hohe Effizienz auf und haben in jüngerer Zeit auch immer höhere Lichtpakete so dass immer mehr Beleuchtungsaufgaben mit diesen Lichtquellen gelöst werden können.

Erfindungsgemäß weist die zweite Schnittstelle eine Spannungsquelle auf, die eine vorbestimmte Spannung abgibt, wobei die Spannungsquelle (Q1, Q2, U2, R903, R904) im zweiten Betriebsmodus zur Energieversorgung des Sensors (7) ausgebildet ist, und weiterhin weist die zweite Schnittstelle eine Messschaltung für eine an der zweiten Schnittstelle anliegenden Spannung auf. Damit kann vorteilhaft sowohl das LEDset Protokoll realisiert werden als auch ein digitales Protokoll zum Empfangen von Sensordaten.

Erfindungsgemäß wirkt die Spannungsquelle der zweiten Schnittstelle nur bis zu einem bestimmten Ausgangsstrom der zweiten Schnittstelle wie eine Spannungsquelle. Dies stellt einen sicheren Betrieb im Modus zum Empfangen digitaler Daten von einem angeschlossenen Sensor sicher.

In einer besonders bevorzugten Ausführungsform korreliert die von der Messschaltung gemessene Spannung mit dem festgestellten Ausgangsstrom am Ausgang der Schaltungsanordnung. Diese Maßnahme realisiert vorteilhaft den LEDset Standard zur Einstellung des Ausgangsstroms des Treibers über einen Stromsetzwiderstand an der zweiten Schnittstelle.

Erfindungsgemäß ist die zweite Schnittstelle eingerichtet, die Informationen von dem Sensor digital durch Erkennen einer getakteten Spannungsänderung zwischen zwei unterschiedlichen Spannungen am Ausgang der zweiten Schnittstelle zu empfangen. Mit getakteter Spannungsänderung ist hier ein Aufprägen digitaler Information durch einprägen zweier verschiedener Spannungsniveaus in den Ausgang der zweiten Schnittstelle gemeint. So kann eine erste höhere Spannung von z.B. 5V (= binär 0) und eine zweite Spannung von z.B. 2,7V (=binär 1) der zweiten Schnittstelle digitale Zustände repräsentieren, über die bitweise Informationen übertragen werden. Dabei können verschiedene digitale Kodierverfahren wie z.B. die Manchestercodierung verwendet werden. Vorteilhaft stellt dies eine kontinuierliche Spannungsversorgung des Sensors sicher.

Damit dient die Spannungsquelle der zweiten Schnittstelle erfindungsgemäß zur Energieversorgung des Sensors. Dadurch, dass für die Informationsübertragung zwei unterschiedliche Spannungsniveaus verwendet werden, wird während der gesamten Übertragungsdauer der Übertragung digitaler Informationen gleichzeitig vorteilhaft Energie an den Sensor zur Energieversorgung des Sensors übertragen.

Bevorzugt repräsentiert eine Spannung von 2,7V an der zweiten Schnittstelle eine logische Eins und eine Spannung von 5V der zweiten Schnittstelle eine logische Null. Mit diesen zwei Spannungsniveaus kann gleichzeitig vorteilhaft die Stromversorgung des Sensors sichergestellt werden und andererseits eine einfache und zuverlässige Erkennung der digital übertragenen Werte sichergestellt werden.

Eine nicht erfindungsgemäße Ausführungsform stellt einen Sensor zum Anschließen an eine Schaltungsanordnung dar, wobei der Sensor eine erste Schnittstelle zum Übertragen von vom Sensor erfassten Informationen an die Schaltungsanordnung aufweist, wobei der Sensor eingerichtet ist, die gesendeten Informationen digital über Binärsignale an der ersten Schnittstelle zu übertragen, und wobei der Sensor eingerichtet ist, über diese Schnittstelle mit Strom versorgt zu werden. Durch die kombinierte Übertragung von Daten und die Stromversorgung des Sensors ist die ganze Anordnung sehr effizient im Energieverbrauch und es werden ebenfalls zusätzliche Bauteile und Klemmen auf der Seite des Schaltungsanordnung sowie auf der Sensorseite eingespart.

In einer weiteren nicht erfindungsgemäßen Ausführungsform weist der Sensor eine galvanisch getrennte zweite Schnittstelle zum Übertragen von Informationen an eine andere Schaltungsanordnung auf. Damit können vorteilhaft zwei Schaltungsanordnungen wie z.B. LED Treiber gleichzeitig mit Sensorinformationen versorgt werden. Da diese dann gleich reagieren können kann diese Anordnung vorteilhaft in Leuchten mit hohen Lichtpaketen verwendet werden, wo ein LED Treiber alleine zu Leistungsschwach ist.

In einer anderen nicht erfindungsgemäßen Ausführungsform werden die Binärsignale durch einprägen zweier unterschiedlichen Spannungen an der ersten Schnittstelle und/oder der zweiten Schnittstelle gebildet. Dies kann vorteilhaft eine sichere Erkennung und gleichzeitig zuverlässige Stromversorgung des Sensors sicherstellen. Die unterschiedlichen Spannungen können dabei z.B. vorteilhaft 2,7V und 5V betragen. Da der Sensor 2,7V zu seiner Spannungsversorgung benötigt kann er über die Schnittstelle kontinuierlich mit Strom versorgt werden und die Energieeffizienz der gesamten Anordnung steigt.

In einer anderen nicht erfindungsgemäßen Ausführungsform repräsentiert eine Spannung von 2,7V an der ersten Schnittstelle eine logische Eins und eine Spannung von 5V an der ersten Schnittstelle eine logische Null. Der Vorteil dieser Maßnahme ist, dass die digitalen Werte besonders einfach und sicher übertragen werden können.

In einer anderen nicht erfindungsgemäßen Ausführungsform stellen die gesendeten Informationen Helligkeitswerte des vom Sensor (7) gemessenen Lichts dar. Damit kann bevorzugt eine tageslichtabhängige Lichtregelung realisiert werden, die Energie spart.

In einer weiteren nicht erfindungsgemäßen Ausführungsform stellen die gesendeten Informationen vom Sensor (7) gemessene Präsenzereignisse dar. Mit dieser Information kann das Licht bei Nichtpräsenz von Personen vorteilhaft abgeschaltet oder gedimmt werden, um weitere Energie zu sparen.

Die abhängigen Ansprüche bilden den zentralen Gedanken der Erfindung in besonders vorteilhafter Weise weiter.

Bevorzugte Ausführungsformen finden sich in den abhängigen Ansprüchen und der gesamten Offenbarung wieder.

### Kurze Beschreibung der Zeichnungen

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:
- Fig. 1: ein bevorzugtes Ausführungsbeispiel der Schaltungsanordnung in einem ersten Betriebsmodus,
- Fig. 2: ein bevorzugtes Ausführungsbeispiel der Schaltungsanordnung in einem zweiten Betriebsmodus,
- Fig. 3: die Schaltungsanordnung in einem weiteren Betriebsmodus, in dem an die erste Schnittstelle ein Taster zur Steuerung der Schaltungsanordnung angeschlossen ist, und an dem ein Sensor an die Schaltungsanordnung angeschlossen ist,
- Fig. 4: den schematischen Plan einer Installation zweier Schaltungsanordnungen mit einer Tastensteuerung und einem angeschlossenen Sensor,
- Fig. 5: eine DALI Installation, an dem mehrere Schaltungsanordnungen an eine übergeordnete DALI Steuerung angeschlossen sind und an eine der Schaltungsanordnungen ein Sensor angeschlossen ist, wobei die Schaltungsanordnung die Sensorsignale umsetzt und an die übergeordnete DALI Steuerung sendet,
- Fig. 6: eine Ausgestaltung der Schnittstelle der Schaltungsanordnung,
- Fig. 7: charakteristischen Kurvenverläufe im Betrieb mit dem Sensor,
- Fig. 8: eine Ausgestaltung der Schnittstelle des Sensors,
- Fig. 9: ein schematisches Statusdiagramm der Software die die am A/D-Wandler anliegenden Signale verarbeitet,
- Fig. 10: ein Statusdiagramm eines Paketdecoders, der aus dem getakteten Signal an der zweiten Schnittstelle ein digitales DALI Paket generiert.

### Bevorzugte Ausführung der Erfindung

Im Folgenden werden nun einige Ausgestaltungen der Erfindung erläutert. Zur sicheren Zuordnung folgen nun einige Begriffsdefinitionen: Die Schaltungsanordnung 1 ist in den Ausgestaltungen bevorzugt ein LED Treiber, ein elektronisches Vorschaltgerät für LEDs und LED-Module. Daher wird der Begriff LED Treiber im Folgenden gleichbedeutend mit dem Begriff Schaltungsanordnung verwendet.

Der LED Treiber weist ebenfalls zwei Schnittstellen auf, die erste Schnittstelle ist eine DALI Schnittstelle. DALI steht hier für "Digital Adressable Light Interface" und ist seit vielen Jahren ein Schnittstellenstandard in der Lichtindustrie. Daher wird der Begriff "DALI Schnittstelle" im Folgenden gleichbedeutend mit "erste Schnittstelle" verwendet. Die zweite Schnittstelle 17 ist eine LEDset Schnittstelle, über welche der Strombedarf aller angeschlossenen LED-Module an die Schaltungsanordnung gemeldet wird. Die LEDset Schnittstelle ist eine recht einfache und funktionale analoge Schnittstelle welche sich im Beleuchtungsbereich mehr und mehr durchsetzt. Die Spezifikation kann über das Zhaga Konsortium eingesehen werden: http://www.zhagastandard.org/data/downloadables/9/2/2/ledset-power-interface-specification-v10.pdf?force-download=yes (Abgerufen am 20.12.2016). Daher wird der Begriff "LEDset Schnittstelle" im Folgenden gleichbedeutend mit dem Begriff "zweite Schnittstelle" verwendet.

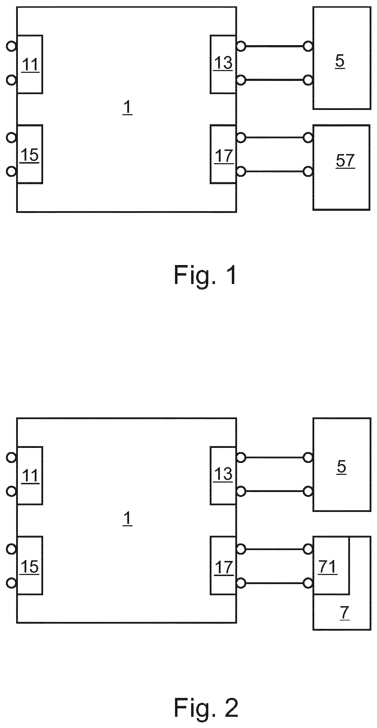

Fig. 1 zeigt ein bevorzugtes Ausführungsbeispiel der Schaltungsanordnung 1 in einem ersten Betriebsmodus, in dem ein LED-Modul 5 an den Ausgang 13 sowie eine Schnittstelle 57 mit einer Stromsetzschaltung an die zweite Schnittstelle 17 der Schaltungsanordnung angeschlossen ist. Das LED Modul 5 kann auch selbst über eine Schnittstelle 57 mit der Stromsetzschaltung verfügen, die an die zweite Schnittstelle 17 des LED Treibers angeschlossen ist, um den Strombedarf des LED-Moduls 5 an die Schaltungsanordnung zu melden. Der LED Treiber 1 weist hierzu eine Spannungsquelle auf die mit der zweiten Schnittstelle 17 gekoppelt ist. Weiterhin ist eine Strommesseinrichtung an die zweite Schnittstelle 17 angeschlossen. Die zweite Schnittstelle prägt also eine vorbestimmte Spannung über die Spannungsquelle in das LED-Modul 5 ein und misst dabei den Strom, der an der zweiten Schnittstelle anliegt. Der gemessene Strom bestimmt dabei dann den Ausgangsstrom, den die Schaltungsanordnung über den Ausgang 13 an das LED-Modul 5 anlegt. Je höher der gemessene Strom an der Schnittstelle 17, desto höher der Ausgangsstrom des LED-Treibers. Der Strom wird bestimmt durch einen Widerstand in der Schnittstelle 57 (des LED-Moduls 5), dessen Wert den Strombedarf des LED-Moduls 5 kennzeichnet. Je kleiner der Widerstandswert ist, desto größer der Strombedarf des Moduls. Aus diesem Grund ist es mit dieser LEDSet Schnittstelle möglich, auch mehrere Module parallel zu schalten. Bei der Parallelschaltung der Widerstände der LED Module verringert sich der Wert des resultierenden Gesamtwiederstands, was einen größeren Strombedarf anzeigt. Die Standardspannung der Schnittstelle beträgt 5V.

Über eine erste Schnittstelle 15 kann der LED Treiber gesteuert werden, insbesondere kann das LED-Modul 5 Ein- und ausgeschaltet sowie gedimmt werden. Die erste Schnittstelle 15 ist hier als DALI Schnittstelle ausgestaltet. Die Schaltungsanordnung 1 weist weiterhin einen Eingang 11 zum Eingeben einer Eingangsspannung auf. Die Eingangsspannung kann eine Netzwechselspannung oder eine Gleichspannung (bei Notstromfähigen LED Treibern) sein.

Fig. 2 zeigt das bevorzugte Ausführungsbeispiel des LED-Treibers 1 in einem zweiten Betriebsmodus, in dem ein LED-Modul 5 an den Ausgang 13 sowie ein Sensor 7 an die zweite Schnittstelle 17 angeschlossen ist.

Der Ausgangsstrom des LED-Treibers 1 für das LED-Modul 5 wird hierbei über die erste Schnittstelle 15 eingestellt. Als DALI Schnittstelle kann der Stromwert digital übergeben und fest in der Schaltungsanordnung 1 abgespeichert werden.

An die zweite Schnittstelle 17 ist ein Sensor 7 angeschlossen. Da die zweite Schnittstelle 17 eine LEDSet Schnittstelle ist, kann der Sensor über die Spannungsquelle versorgt werden. Die Spannungsquelle ist so ausgelegt, dass sie nur bis zu einem bestimmten Maximalstrom als Spannungsquelle arbeitet. Wird dieser Maximalstrom überschritten, so wird die Spannung an der Schnittstelle nicht mehr aufrechterhalten und bricht zusammen. Dies stellt eine effiziente Betriebsweise der zweiten Schnittstelle 17 sicher. Der Maximalstrom ist so bemessen, dass alle bekannten Widerstände, die den Strombedarf der bekannten Module repräsentieren noch sicher über die am Widerstand abfallende Spannung erkannt werden können. Vorliegend ist der Maximalstrom mit 6mA festgelegt. Werden der zweiten Schnittstelle 17 nun vom Sensor 7 über die Sensorschnittstelle 71 periodisch verschiedene Spannungsniveaus eingeprägt, um digitale Daten zu übertragen, so beträgt der Ausgangsstrom maximal 6mA. Damit fallen die Verluste an der Schnittstelle nicht zu hoch aus.

Anders herum reichen die 6mA aber, um den Sensor mit der notwendigen Leistung für dessen Betrieb zu versorgen.

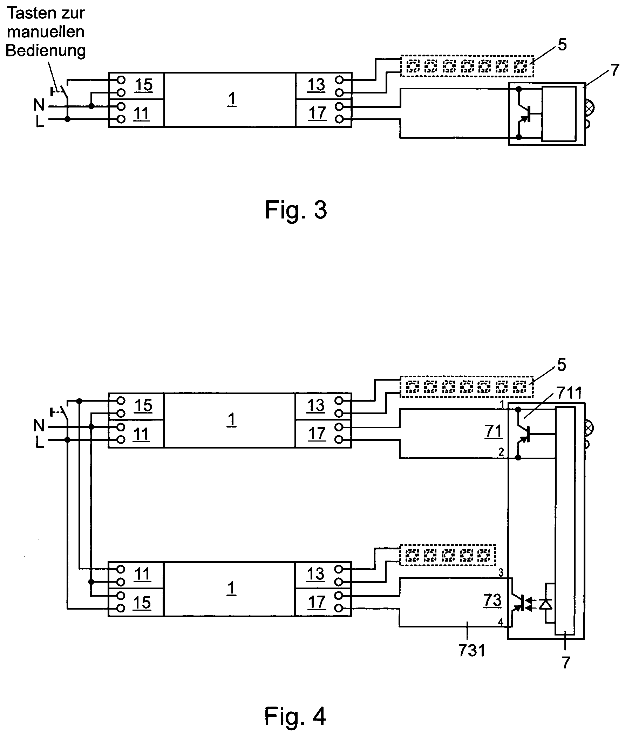

Fig. 3 zeigt den LED Treiber 1 in einem weiteren Betriebsmodus, in dem an die erste (DALI-) Schnittstelle ein Taster zur Steuerung des LED Treibers angeschlossen ist. Mit dem Taster kann das LED Modul 5 Ein- und Ausgeschaltet sowie gedimmt werden. Landläufig hat sich hierfür der Begriff "Touch-Dim" eingebürgert. Hierfür die DALI-Schnittstelle zu verwenden ist im Stand der Technik bekannt. Die Kombination mit einem Taster zur Steuerung kann vorteilhaft in einfachen Installationen ohne vernetztes Steuerungssystem verwendet werden. Der Sensor kann hier z.B. zur Einhaltung einer spezifischen Beleuchtungsstärke verwendet werden, wobei das LED Modul 5 dann tageslichtabhängig mehr oder weniger gedimmt betrieben wird.

Eine weiterführende Variante der beschriebenen Installation zeigt Fig. 4. Hier sind zwei LED Treiber 1 im Einsatz, um zwei LED Module 5 mit einer Tastersteuerung und einem Sensor 7 zu betreiben. Der Sensor 7 weist hierzu zwei Galvanisch voneinander getrennte Schnittstellen 71 und 73 auf, die an je einen LED Treiber 1 angeschlossen sind. Die Schnittstelle 71 bewerkstelligt gleichzeitig die Stromversorgung des Sensors 7 über den ersten LED Treiber 1. Über die galvanisch getrennte Schnittstelle 73 werden dieselben Informationen an den zweiten Treiber 1 ausgegeben, so dass beide an die zwei LED Treiber angeschlossenen LED Module 5 gleichermaßen Licht, Bewegungs- und Helligkeits-Informationen vom Sensor erhalten. Da die LEDset Schnittstellen 17 der LED Treiber nicht zusammengeschaltet werden dürfen ist eine galvanische Trennung notwendig.

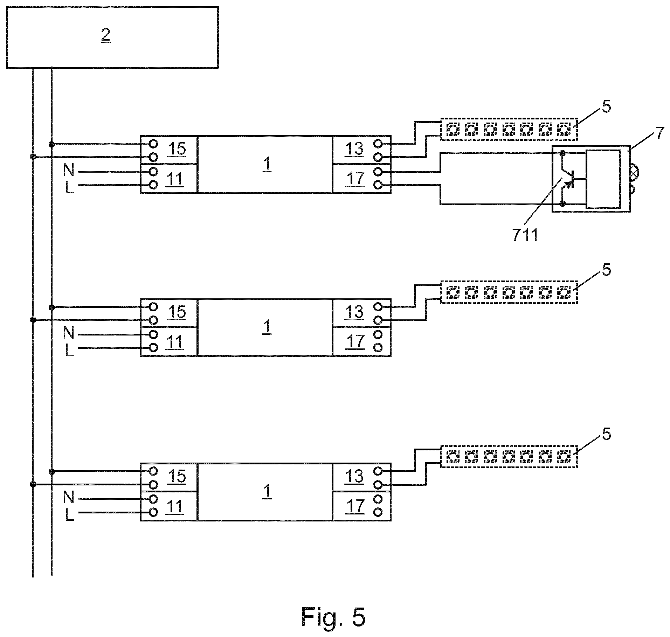

Fig. 5 zeigt wiederum eine komplexere DALI Installation mit mehreren LED-Treibern 1 und einem übergeordneten DALI Steuergerät 2, welches die Installation steuert. An einen der LED Treiber 1 ist ein Sensor 7 angeschlossen, der seine erfassten Umgebungsdaten an den LED Treiber 1 liefert. Der LED Treiber dient in diesem Fall als eine Art Gateway, setzt die Daten um, und sendet sie über die DALI Leitung an das übergeordnete Steuergerät 2.

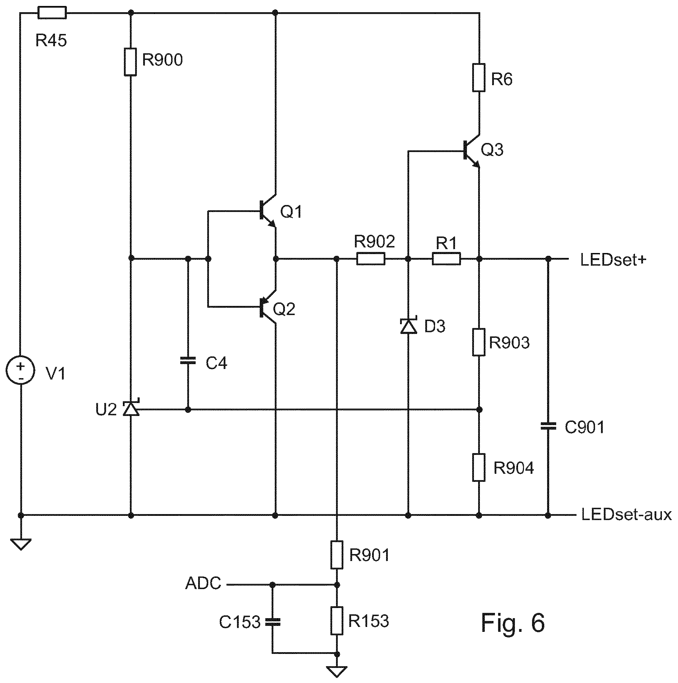

Fig. 6 zeigt eine Ausgestaltung der Schnittstelle 17 des LED Treibers 1. Für die Erkennung der Sensorsignale und Versorgung des Sensors werden wenige zusätzliche Bauteile benötigt. Die normale Funktion der Spannungsversorgung der Schnittstelle wird im Kern von den beiden Transistoren Q1 und Q2, der einstellbaren Spannungsreferenz U2 zusammen mit dem Spannungsteiler aus R903 und R904 bewerkstelligt. Die Strommessung erfolgt über den Shunt R902 und den Spannungsteiler R901 und R153. Dieses Messsignal wird in den Analog-Digitalwandeleingang ADC eines Mikrokontrollers (nicht gezeigt) zur Weiterverarbeitung eingegeben.

Für die digitale Datenübertragung wird diese Schaltung durch einige weitere Bauteile angepasst. Die Diode D3 klemmt die Ausgangsspannung auf einen Maximalwert, da die recht langsam reagierende einstellbare Spannungsreferenz U2 nach einem Kurzschließen des Ausgangs der Schnittstelle 17 ein Überschwingen der Ausgangsspannung der Schnittstelle 17 verursacht. Die Widerstände R902 und R1 dienen zusammen als Strommesswiderstand im normalen Betriebsmodus, wo der gemessene Stromwert mit dem Strom am Ausgang 13 des Treibers korreliert.

Ist ein Sensor 7 an die Schnittstelle angeschlossen, dann fließen höhere Ströme, was die am Widerstand R1 abfallende Spannung erhöht. Dies hat zur Folge, dass der Transistor Q3 aufgesteuert wird. Damit erzeugt eine nur kleine Änderung des Stroms über den Widerstand R902 einen hohen Ausgangsstrom der LEDset Schnittstelle 17. Das gemessene Stromsignal am Analog-Digitalwandeleingang ADC des Mikrokontrollers bleibt über einen großen Strombereich von etwa 1,2mA bis zu etwa 7mA annähernd gleich. Diese Zahlenwerte lassen sich auf die Erfordernisse des jeweiligen Systems skalieren.

Der Widerstand R6 stellt eine Strombegrenzung des Ausgangsstromes der LEDset Schnittstelle sicher. Alternativ zu R6 kann auch eine aktive Strombegrenzungsschaltung eingesetzt werden. Wenn diese Strombegrenzung eingreift, dann geht der Transistor Q3 in Sättigung und die Stromverstärkung wird kleiner. Als Konsequenz daraus erhöht sich die Spannung über dem Widerstand R901 und wird ein größeres Signal am Analog-Digitalwandeleingang ADC generieren. Wenn also die LEDset Schnittstelle "kurzgeschlossen" wird, dann wird ein charakteristisches HIGH Signal am Analog-Digitalwandeleingang ADC generiert, während das Signal logisch LOW ist wenn am Ausgang der LEDset Schnittstelle ein Strom von 0mA bis zu 7mA fließt. Die Schwellen zur Erkennung eines logisch HIGH und eines logisch LOW Signals am Ausgang der LEDset Schnittstelle 17 müssen also zwischen diesen beiden charakteristischen Werten liegen.

Niedrigere Lasten am Ausgang der LEDset Schnittstelle 17 münden immer in einem niedrigeren Signal am Analog-Digitalwandeleingang ADC.

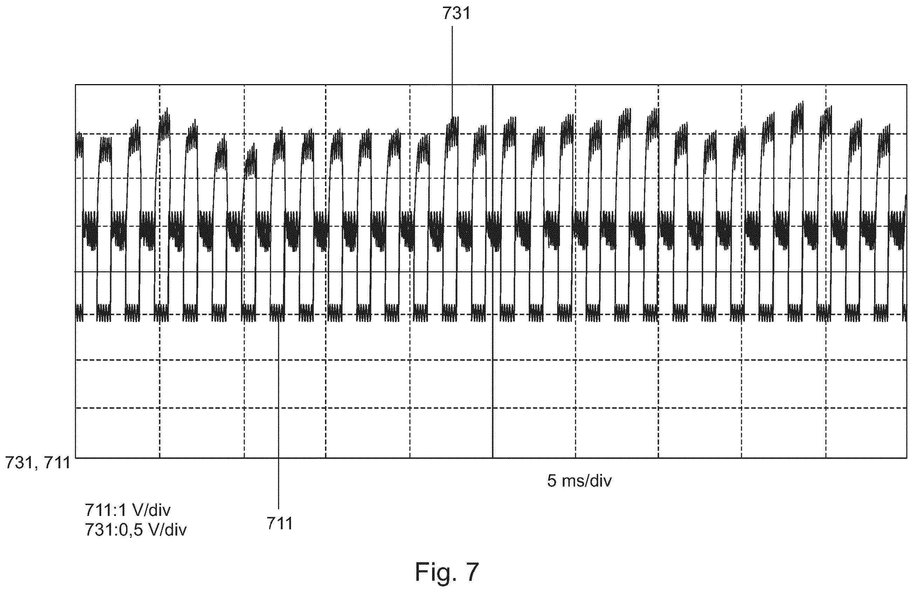

Fig. 7 zeigt die charakteristischen Kurvenverläufe bei der oben erläuterten Betriebsweise. Die Kurve 711 zeigt die Spannung am Ausgang der LEDset Schnittstelle 17, die von 5V auf 2,7V moduliert wird. Die Kurve 731 zeigt die Spannung am Analog-Digitalwandeleingang ADC des Mikrokontrollers. Es ist sofort zu erkennen, dass die Spannung am Analog-Digitalwandeleingang ADC des Mikrokontrollers einfach zwischen logisch LOW und logisch HIGH unterschieden werden kann, wenn entsprechende Erkennungsschwellen für die beiden Zustände gesetzt werden.

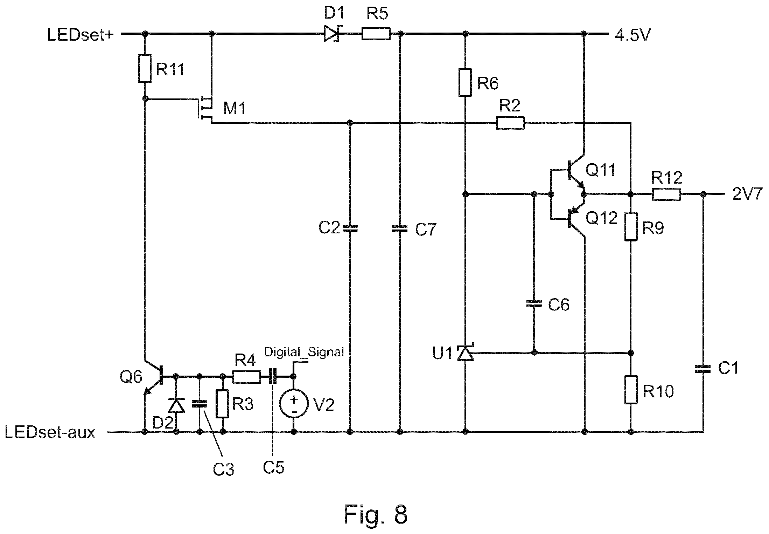

Fig. 8 zeigt eine Ausgestaltung der Schnittstelle 71 des Sensors 7. Dadurch, dass die Spannung beim "Kurzschließen" des Ausgangs der LEDset Schnittstelle 17 nicht auf 0V sondern auf 2,7V "kurzgeschlossen" wird kann während beider Zustände des Ausgangs der LEDset Schnittstelle 17 Energie an den Sensor zum Betrieb übertragen werden. Die Bauteile D1, R5 und C7 werden für die Separierung, Pufferung und Filterung der 4,5V von der LEDset Schnittstelle 17 benötigt.

Die Bauteile U1, R6, Q11, Q12, C6, R9 und R10 bilden eine zweiquadranten 2,7V Spannungsversorgung.

Der Schalter M1 zieht den positiven Ausgang der der LEDset Schnittstelle 17 nicht auf den negativen Ausgang, sondern auf den generierten 2,7V Ausgang. Damit ist auch im "kurzgeschlossenen" Betriebszustand der Strom aus dem Ausgang der LEDset Schnittstelle für die 2,7V Versorgung des Sensors 7 benutzbar, was den Strombedarf insgesamt drastisch verringert und die Leistungsfähigkeit der zweiquadranten 2,7V Spannungsversorgung des Sensors 7 stark erhöht. Dadurch, dass die Spannungsversorgung als zweiquadranten Spannungsversorgung aufgebaut ist kann sie auch Strom von der LEDset Schnittstelle 17 beziehen und damit den Sensor versorgen.

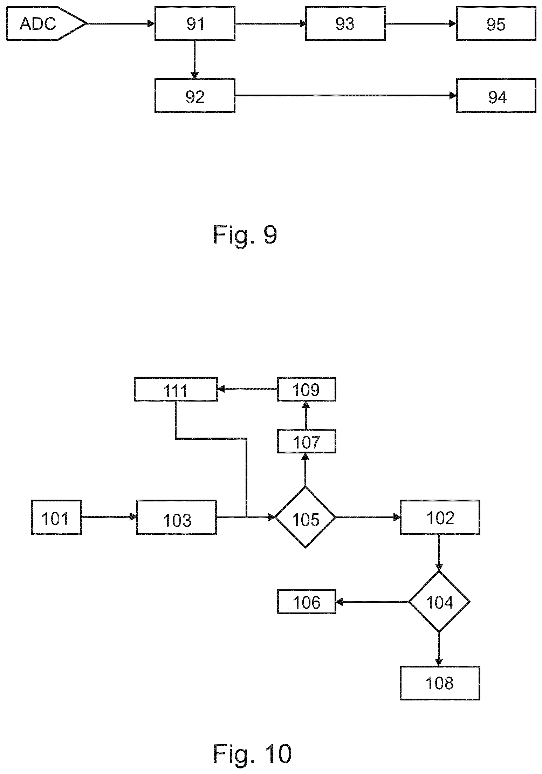

Fig. 9 zeigt ein schematisches Statusdiagramm der Software die die am A/D-Wandler des Mikrokontrollers anliegenden Signale verarbeitet. Das Signal wird in eine Logik 91 eingelesen, die das Signal daraufhin auswertet, ob es ein statisches oder ein getaktetes Signal ist.

Wird das Signal als statisches Signal erkannt, dann wird es an einen Tiefpassfilter 93 weitergegeben, der aus dem Signal eine analoge Spannung generiert. Diese Spannung wird dann als gemessener LEDset Strom 95 in der Schaltungsanordnung weiterverarbeitet, das heißt dass entsprechend der Spannung ein bestimmter Strom am Ausgang 13 der Schaltungsanordnung 1 eingestellt wird.

Wird das Signal als getaktetes Signal erkannt, so wird es in einen Paketdecoder 92 eingegeben, der die Spannungsflanken interpretiert und eine entsprechende Bitfolge generiert. Diese Bitfolge wird dann als Datenpaket 94 zur weiteren Verarbeitung weitergegeben.

Fig. 10 schließlich zeigt ein Statusdiagramm eines Software-Paketdecoders 92, der aus dem getakteten Signal an der zweiten Schnittstelle 17 ein digitales DALI Paket generiert.

Im Zustand 101 ist der Algorithmus im Idle-Zustand und wartet auf die Detektion einer Flanke im Signal. Wenn im Schritt 103 eine Flanke detektiert wird, dann prüft der Algorithmus im Schritt 105, ob schon alle Werte abgefragt wurden. Ist dies nicht der Fall, dann wird nach einer kurzen Wartezeit 107 der Wert im Schritt 109 eingelesen und danach findet im Schritt 111 ein Pre-Processing bezüglich der Manchester Codierung statt, in der das Signal kodiert ist. Nach dem Verarbeiten des ersten Wertes wird wieder in die Abfrage gesprungen ob es weitere Werte gibt, die verarbeitet werden müssen. Werden weitere Werte detektiert, dann wird die Verarbeitungsschleife erneut durchlaufen, so lange bis keine weiteren Werte mehr erkannt werden. Ist dies der Fall, werden alle abgefragten Werte im Schritt 102 einer Manchester Decodierung unterzogen, um die Binärdaten zu erhalten.

Diese Daten werden dann im Schritt 104 auf Gültigkeit geprüft und bei erkannten Fehlern im Schritt 106 verworfen. Wird ein gültiger Wert erkannt, dann werden die Daten im Schritt 108 in ein DALI Paket verpackt und einer DALI Bibliothek in der Schaltungsanordnung 1 zugeordnet. Die Daten können dann entweder in der Schaltungsanordnung 1 selbst weiterverwendet werden oder auf dem DALI Bus 15 weitervermittelt werden.

### BEZUGSZEICHENLISTSE

### Schaltungsanordnung

- 2: übergeordnetes DALI Steuergerät
- 5: LED-Modul
- 7: Sensor
- 11: Eingang der Schaltungsanordnung
- 13: Ausgang der Schaltungsanordnung
- 15: erste Schnittstelle
- 17: zweite Schnittstelle
- 57: Schnittstelle des LED-Moduls
- 71: erste Schnittstelle des Sensors 7
- 73: galvanisch getrennte zweite Schnittstelle des Sensors 7
- 711: Kurve der Spannung am Ausgang der zweiten Schnittstelle 17
- 731: Kurve am Analog-Digitalwandeleingang ADC
- 91: Signalverarbeitungslogik
- 93: Tiefpassfilter
- 95: LEDset Stromsignal
- 92: Paketdecoder
- 94: Datenpaket
- 101: Idle Zustand des Algorithmus
- 102: Manchester Decodierung
- 103: Signalflanke erkannt
- 104: Prüfen ob Daten Gültig sind
- 105: Abfrage ob alle Werte eingegangen sind
- 106: Verwerfen des Datenpaketes
- 107: Verzögerungsschleife
- 108: Verpacken und Versenden des Datenpaketes als DALI Paket
- 109: Einlesen des Signalwertes
- 111: Manchester Pre-Processing
- ADC: Analog-Digitalwandeleingang

## Patentansprüche

1. Schaltungsanordnung zum Betreiben von Lichtquellen, aufweisend:
- einen Eingang (11) zum Eingeben einer Eingangsspannung,
- einen Ausgang (13) zum Ausgeben eines Ausgangsstromes,
- eine erste Schnittstelle (15), ausgebildet als DALI-Schnittstelle, zum Steuern der Schaltungsanordnung,
- eine zweite Schnittstelle (17), ausgebildet als LEDset-Schnittstelle,
wobei die Schaltungsanordnung eingerichtet ist, zwei unterschiedliche Betriebsmodi einzustellen:
- in einem ersten Betriebsmodus ist die Schaltungsanordnung eingerichtet, über die erste Schnittstelle (15) gesteuert zu werden und einen an der zweiten Schnittstelle (17) anliegenden Strom zu messen und einen Strombedarf für den Ausgang (13) entsprechend dem gemessenen Strom festzustellen,
- in einem zweiten Betriebsmodus ist die Schaltungsanordnung eingerichtet, über die erste Schnittstelle (15) gesteuert zu werden und eine Information über den am Ausgang (13) einzustellenden Ausgangsstrom zu empfangen,
**dadurch gekennzeichnet, dass**
die Schaltungsanordnung eingerichtet ist, über die zweite Schnittstelle (17) in dem zweiten Betriebsmodus digital kodierte Informationen von einem an die zweite Schnittstelle (17) angeschlossenen Sensor (7) zu empfangen, zu verarbeiten und diese verarbeiteten digital kodierten Sensorinformationen an die erste Schnittstelle (15) weiterzugeben,
wobei die zweite Schnittstelle (17) eine Spannungsquelle (Q1, Q2, U2, R903, R904) aufweist, die eine vorbestimmten Spannung abgibt, und wobei die Spannungsquelle (Q1, Q2, U2, R903, R904) im zweiten Betriebsmodus zur Energieversorgung des Sensors (7) ausgebildet ist, sowie eine Messschaltung (R902, R901, R153) für eine an der zweiten Schnittstelle (17) anliegende Spannung, wobei die Spannungsquelle der zweiten Schnittstelle (17) nur bis zu einem bestimmten Ausgangsstrom der zweiten Schnittstelle wie eine Spannungsquelle wirkt, wobei die zweite Schnittstelle (17) im zweiten Betriebsmodus eingerichtet ist, die digital kodierten Informationen von dem angeschlossenen Sensor (7) digital durch Erkennen einer getakteten Spannungsänderung zwischen zwei unterschiedlichen Spannungen am Ausgang der zweiten Schnittstelle (17) zu empfangen, wobei eine erste höhere Spannung und eine zweite niedrigere Spannung der zweiten Schnittstelle (17) digitale Zustände der digital kodierten Informationen repräsentieren.

2. Schaltungsanordnung gemäß Anspruch 1, **dadurch gekennzeichnet, dass** die Lichtquellen Leuchtdioden oder Leuchtdiodenmodule (5) sind.

3. Schaltungsanordnung gemäß Anspruch 1 oder 2, **dadurch gekennzeichnet, dass** die zweite Schnittstelle (17) des weiteren eine Strombegrenzungsschaltung für den Ausgangsstrom bestehend aus einem Transistor (Q3) und einem Widerstand (R6) aufweist.

4. Schaltungsanordnung gemäß Anspruch 3, **dadurch gekennzeichnet, dass** die von der Messschaltung (R902, R901, R153) gemessene Spannung (711) im ersten Betriebsmodus mit dem festgestellten Ausgangsstrom am Ausgang (13) der Schaltungsanordnung korreliert.

5. Schaltungsanordnung gemäß einem der vorhergehenden Ansprüche, **dadurch gekennzeichnet, dass** die zweite niedrigere Spannung von 2,7V an der zweiten Schnittstelle (17) eine logische Eins repräsentiert und die erste höhere Spannung von 5V der zweiten Schnittstelle (17) eine logische Null repräsentiert.

## Claims

1. Circuit arrangement for operating light sources, having:
- an input (11) for inputting an input voltage,
- an output (13) for outputting an output current,
- a first interface (15), configured as a DALI interface, for controlling the circuit arrangement,
- a second interface (17), configured as a LEDset interface, wherein the circuit arrangement is configured to set two different operating modes:
- in a first operating mode, the circuit arrangement is configured to be controlled by way of the first interface (15) and to measure a current present across the second interface (17) and to determine a current requirement for the output (13) in accordance with the measured current,
- in a second operating mode, the circuit arrangement is configured to be controlled by way of the first interface (15) and to receive information about the output current that is to be set at the output (13),
**characterized in that**
the circuit arrangement is configured to use the second interface (17) in the second operating mode to receive digitally encoded information from a sensor (7) connected to the second interface (17), to process this information and to pass this processed digitally encoded sensor information on to the first interface (15),
wherein the second interface (17) has a voltage source (Q1, Q2, U2, R903, R904), which delivers a predetermined voltage, and wherein the voltage source (Q1, Q2, U2, R903, R904) is designed to supply power to the sensor (7) in the second operating mode, and a measuring circuit (R902, R901, R153) for measuring a voltage applied across the second interface (17), wherein the voltage source of the second interface (17) acts as a voltage source only up to a predetermined output current of the second interface, wherein the second interface (17) is configured, in the second operating mode, to digitally receive the digitally encoded information from the connected sensor (7) by detecting a clocked voltage change between two different voltages at the output of the second interface (17), wherein a first higher voltage and a second lower voltage of the second interface (17) represent digital states of the digitally encoded information.

2. Circuit arrangement according to Claim 1, **characterized in that** the light sources are light-emitting diodes or light-emitting-diode modules (5).

3. Circuit arrangement according to Claim 1 or 2, **characterized in that** the second interface (17) furthermore has a current-limiting circuit for the output current consisting of a transistor (Q3) and a resistor (R6).

4. Circuit arrangement according to Claim 3, **characterized in that** the voltage (711) measured by the measuring circuit (R902, R901, R153) correlates with the determined output current at the output (13) of the circuit arrangement in the first operating mode.

5. Circuit arrangement according to one of the preceding claims, **characterized in that** the second lower voltage of 2.7 V across the second interface (17) represents a logic one and the first higher voltage of 5 V of the second interface (17) represents a logic zero.

## Revendications

1. Agencement de circuit pour le fonctionnement de sources lumineuses, comprenant :
- une entrée (11) pour l'introduction d'une tension d'entrée,
- une sortie (13) pour la délivrance d'un courant de sortie,
- une première interface (15), conçue comme une interface DALI, pour la commande de l'agencement de circuit,
- une deuxième interface (17), conçue comme une interface LEDset, l'agencement de circuit étant configuré pour régler deux modes de fonctionnement différents :
- dans un premier mode de fonctionnement l'agencement de circuit étant configuré pour être commandé par le biais de la première interface (15) et pour mesurer un courant présent sur la deuxième interface (17) et pour constater un besoin en courant pour la sortie (13) correspondant au courant mesuré,
- dans un deuxième mode de fonctionnement, l'agencement de circuit est configuré pour être commandé par le biais de la première interface (15) et pour recevoir une information sur le courant de sortie à régler à la sortie (13),
**caractérisé en ce que**
l'agencement de circuit est configuré pour recevoir, par le biais de la deuxième interface (17) dans le deuxième mode de fonctionnement, des informations numériquement codées d'un détecteur (7) raccordé à la deuxième interface (17), pour traiter et transférer à la première interface (15) ces informations de détecteur numériquement codées traitées, et
la deuxième interface (17) comprenant une source de tension (Q1, Q2, U2, R903, R904) qui donne une tension prédéterminée, et la source de tension (Q1, Q2, U2, R903, R904) étant réalisée, dans le deuxième mode de fonctionnement, pour alimenter le détecteur (7) en énergie, ainsi qu'un circuit de mesure (R902, R901, R153) pour une tension présente sur la deuxième interface (17), la source de tension de la deuxième interface (17) ne fonctionnant comme une source de tension que jusqu'à un certain courant de sortie de la deuxième interface, la deuxième interface (17) étant configuré pour, dans le deuxième mode de fonctionnement, recevoir numériquement les informations numériquement codées du détecteur (7) raccordé, par reconnaissance d'une modification de tension synchronisée entre deux tensions différentes à la sortie de la deuxième interface (17), une première tension plus haute et une deuxième tension plus basse de la deuxième interface (17) représentant les états numériques des informations numériquement codées.

2. Agencement de circuit selon la revendication 1, **caractérisé en ce que** les sources lumineuses sont des diodes électroluminescentes ou des modules de diodes électroluminescentes (5).

3. Agencement de circuit selon la revendication 1 ou 2, **caractérisé en ce que** la deuxième interface (17) de l'agencement de circuit comprend en outre un circuit délimitant le courant pour le courant de sortie constitué d'un transistor (Q3) et d'une résistance (R6).

4. Agencement de circuit selon la revendication 3, **caractérisé en ce que** la tension (711) mesurée par le circuit de mesure (R902, R901, R153) dans le premier mode de fonctionnement, présente une corrélation avec le courant de sortie constaté à la sortie (13) de l'agencement de circuit.

5. Agencement de circuit selon l'une des revendications précédentes, **caractérisé en ce que** la deuxième tension la plus basse de 2,7 V sur la deuxième interface (17) représente un un logique et la première tension la plus haute de 5 V de la deuxième interface (17) représente un zéro logique.
